# EUROPÄISCHE PATENTSCHRIFT

(11) **EP 3 636 043 B1**
(45) Veröffentlichungstag und Bekanntmachung des Hinweises auf die Patenterteilung: **20.09.2023**
(21) Anmeldenummer: 18733865.2
(22) Anmeldetag: 25.06.2018
(51) Int. Cl.: H05B 3/34, F01N 3/20

(54) **Abschirmteil**
Shielding element
Elément de blindage

(30) Priorität: 27.06.2017 DE 102017210839; 28.02.2018 DE 102018104602
(43) Veröffentlichungstag der Anmeldung: 15.04.2020
(73) Patentinhaber: ElringKlinger AG, 72581 Dettingen/Erms (DE)
(72) Erfinder: HERCHERT, Aylin, 72581 Dettingen/Erms (DE); HUBERT, Andreas, 72581 Dettingen/Erms (DE); WILSCH, Kristina, 72581 Dettingen/Erms (DE); BOLD, Marcel, 72581 Dettingen/Erms (DE); ELL, Bernd, 72581 Dettingen/Erms (DE)
(74) Vertreter: Schmidt, Axel
(86) Internationale Anmeldenummer: PCT/EP2018/066902
(87) Internationale Veröffentlichungsnummer: WO 2019/002181

(56) Entgegenhaltungen:
- EP-A1- 0 174 683
- EP-A1- 2 921 668
- EP-A1- 3 032 058
- EP-A2- 0 824 299
- EP-A2- 2 784 283
- DE-A1- 3 917 107
- DE-A1-102008 030 709
- DE-A1-102012 219 747
- DE-A1-102015 100 404
- DE-A1-102015 101 945
- DE-U1-202007 007 849
- US-A- 3 886 739
- US-A1- 2012 121 478

## Beschreibung

Die vorliegende Erfindung betrifft ein Abschirmteil für einen Antriebsstrang oder einem Bestandteil davon sowie ein Verfahren zu dessen Herstellung.

Aus dem Stand der Technik sind diverse Ansätze zur Ausbildung eines Abschirmteils bekannt. Ferner ist auch bekannt, wie ein Heizsystem an einem Antriebsstrang beispielsweise einer Verbrennungskraftmaschine oder einem Bestandteil davon und insbesondere einem Abgassystem vorgesehen werden kann. Der technische Hintergrund für die Notwendigkeit eines Beheizens einer Verbrennungskraftmaschine oder mindestens eines Bestandteils davon liegt darin begründet, dass insbesondere bei einem Kaltstart auch unter günstigen Umgebungsbedingungen von z.B. +20 °C erst bestimmte Betriebstemperaturen in den genannten Komponenten erreicht werden müssen, um einen zuverlässigen Betrieb gewährleisten zu können. Das gilt insbesondere für den Bereich der Abgasnachbehandlung, in dem Katalysatoren erst auf eine bauartspezifische Betriebstemperatur gebracht werden müssen, bevor eine ausreichende Reduzierung von Schadstoffen durch die Abgasnachbehandlung erreichbar ist. Um dieses Zeitfenster so klein wie möglich zu halten, ist ein aktives, elektrisches Beheizen von Komponenten innerhalb eines Fahrzeuges bekannt, um bestimmte Bauteile vorzuheizen oder sie schneller auf Betriebstemperatur zu bringen und hierdurch beispielsweise die vorstehend angedeuteten Kaltstartemissionen in Abgasstrang zu reduzieren. Auch wenn in Hybrid- oder Elektrofahrzeuge ein Abgasstrang im herkömmlichen Sinn fehlen kann, so gelten die vorstehenden Forderungen in angepasster Weise auch auf alternative Antriebskonzepte unter Nutzung von Brennstoffzellen und/oder Akkumulatoren als Massenspeicher für elektrische Energie.

Es gibt neben dem Einsatz von zusätzlich in einem Katalysator zum schnellen Aufheizung verbranntem Kraftstoff unterschiedlichste Arten von Heizsystemen, welche i.d.R. als ohmsche Widerstandsheizungen angewendet werden. Aus anderen Bereichen der Technik ist die Verwendung z.B. von Heizmatten bekannt, z.B. im Wohn- und Gartenbereich, wo sie beispielsweise als Fußboden- oder Wandheizung verwendet werden. Des Weiteren werden Heizsysteme als Begleitheizsysteme beispielsweise in der chemischen und petrochemischen Industrie, in der Öl- und Gasindustrie und in der Lebensmittelindustrie für Frostschutz und Temperaturhaltung eingesetzt. Im Bereich der Hausinstallation sind derartige Begleitheizsysteme an Warmwasserzuleitungen bekannt, um eine Mindesttemperatur an einem Auslass, z.B. einer Dusche, zu garantieren und zugleich durch ausreichend hohe Temperaturen einer Verkeimung und/oder bakteriellen Belastung insbesondere durch Salmonellen entgegenzuwirken.

Eine weitere Art von Begleitheizung offenbart die DE 20 2007 007 849 U1 als Teil eines Frostwächters in Form eines Systems zum Leiten und Temperieren einer Harnstoff-Wasser-Lösung in Form einer Fluidleitung aus Kunststoff. Hierdurch muss zumindest an einer Brennkraftmaschine verhindert werden, dass die Temperatur dieser korrosiven und kriechfähigen Lösung unter -11°C absenken kann, um durch Ausflockungen verursachte Verstopfungen im Fluidpfad zu vermeiden.

Zum Beheizen diverser Elemente im Fahrzeug gibt es aktuell je nach Anwendung unterschiedliche Lösungen. So offenbart die EP 783 621 B1 einen elektrisch beheizbaren Wabenkörper als Bestandteil eines Katalysators. Auch die WO 2015/040396 A1 offenbart eine elektrisch beheizbare Wabenstruktur als Bestandteil eines Katalysators, der nachgeschaltet einen weiteren Wabenkörper mit anderer Zusammensetzung aufweist. In ähnlicher Weise sieht auch die US 2002/0092298 A1 einen als Wabenstruktur ausgebildeten Heizleiter elektrisch isoliert über einem stromabwärts folgenden eigentlichen Katalysator vor.

Die DE 10 2015 111 689 B3 offenbart einen elektrisch beheizbaren Katalysator und ein Verfahren zu dessen Herstellung, wobei hier die Erzeugung einer bestimmten Wärmeverteilung durch eine entsprechende Ausgestaltung der Heizung in Form eines komplett in eine Isolierung eingebetteten Heizleiters angestrebt ist.

Neben den Abgassystemen gibt es auch bei Batterien eine optimale Betriebstemperatur. Ist die Temperatur zu gering kann die Batterien nicht optimal geladen, gelagert oder entladen werden. Dadurch kann das zu betreibende System bei zu geringen Betriebstemperaturen nicht mit einer vorgeschriebenen Spannung versorgt werden. Die EP 0 588 004 A1 beschreibt dazu beispielsweise eine elektrische Speicherbatterie, insbesondere für einen Fahrzeugantrieb. Um die optimale Betriebstemperatur von ca. 300 °C zu erreichen ist neben einem Kühlsystem und einer entsprechenden Isolierung auch ein Beheizen der Batterie unter bestimmten Umständen erforderlich.

Die DE 102010032088 A1 beschreibt ein Verfahren zum Beheizen eines Batteriesystems mit wenigstens zwei Batterien oder Batterieabschnitten, wobei die Beheizung des Batteriesystems durch das abwechselnde Laden und Entladen des Batteriesystems mit einem Wechselstrom erfolgt. Auch die DE 10 2015 100 404 A1 offenbart ein Batterie-Wärme-Managementsystem, das auch eine Erwärmung der Batterie bewirken kann.

Die DE 102009005853 A1 betrifft ein Batteriesystem, das wenigsten ein Peltierelement umfasst, welches der Kühlung und / oder der Erwärmung mindestens einer Batterie dient. Dabei liegen optimale Temperaturen für bekannte Batteriesysteme bei ca. 20° bis 40°C.

Neben den Batteriesystemen ist es auch bei der Brennstoffzellentechnik von Bedeutung, dass je nach Brennstoffzellentyp eine jeweils optimale Betriebstemperatur erreicht wird. Diese Betriebstemperaturen sind je nach Typ über einen weiten Bereich gestreut: Für eine Polymerelektrolyt-Brennstoffzelle, kurz PEMFC, werden Betriebstemperaturen von 10° bis 100°C angegeben, wobei für Festoxid-Brennstoffzellen, kurz SOFC, Betriebstemperaturen von 450° bis in einen Hochtemperaturbereich von ca. 1.000°C hinein angegeben werden. Die DE 19931061 A1 beschreibt eine mögliche Anordnung zum Beheizen oder auch Kühlen einer Brennstoffzelle und ein entsprechendes Brennstoffzellensystem.

Die DE 20 2007 007 849 U1 offenbart eine Fluidleitung aus einem isolierenden Kunststoff-Material, in der eine Widerstandsheizung angeordnet ist, um zumindest Abschnitte der Fluidleitung zur Vermeidung eines Einfrierens zu temperieren. Zweck ist eine Erwärmung einer Harnstoff-Wasser-Lösung nach Art eines Frostwächters unter der Erschwernis, dass die Harnstoff-Wasser-Lösung stark korrosiv wirkt und daher nicht mit dem Heizleiter in Kontakt treten darf. Zudem ist die Fluidleitung vor hohen Umgebungstemperaturen zu schützen. Dazu ist der Heizleiter in einer die Fluidleitung gegen Überhitzung nach außen hin wirksamen Isolierung aus einem geschäumten Silikon aufgenommen. Auch EP 3 032 058 A1 offenbart eine beheizbare Fluidleitung, deren Heizeffizienz zu steigern ist.

DE 39 17 107 A1 beschreibt eine elektrisch beheizbare Ansaugleitung zur Vorerwärmung der Frischluft. Vorgeschlagen wird eine inwendige Anordnung von durch elektrischen Stromfluss erhitzten dreidimensional verformbaren Matten aus Kohlefasern.

EP 2 921 668 A1 offenbart eine Abgasanlage mit wenigstens einer Heizeinrichtung, die im Bereich einer Heizwendel aus Widerstands-Heizmaterial eine thermisch isolierende Hülle aufweist.

Die bisher verfügbaren Lösungen sind nicht ohne größeren zusätzlichen Aufwand in ein Abschirmteil als bestehendes System einfügbar. Aufgrund dessen sind auch Wartungen und Reparaturen bei Defekten sehr aufwändig. Des Weiteren wird meist durch die verfügbaren Lösungen zusätzlicher Bauraum benötigt, was die Möglichkeiten einer Nachrüstung stark einschränkt. Bisherige Lösungen im Bereich der Abgassysteme sind zudem vergleichsweise teuer.

Die vorliegende Erfindung hat die Aufgabe hier Abhilfe in Form eines Abschirmteils der genannten Art zu schaffen, die in ein bestehendes System preiswert integrierbar ist. Weiterhin ist es eine Aufgabe der vorliegenden Erfindung, ein effizienteres Herstellungsverfahren für ein solches Abschirmteil zu schaffen.

Diese Aufgabe wird erfindungsgemäß durch die Merkmale von Anspruch 1 durch ein Abschirmteil), das zum Umschließen eines Antriebsstrangs oder eines Bestandteils davon ausgebildet ist, wobei das Abschirmteil nach außen hin eine metallische Reflexionsschicht mit anschließender thermischer Isolationslage aufweist, die mit einem Heizsystem versehen ist, wobei das Heizsystem mindestens ein Heizelement zum aktiven elektrischen Beheizen eines Antriebsstrangs oder eines Bestandteils davon umfasst, dadurch gelöst, dass mindestens ein Heizelement auf Basis von NickelChrom-Legierungen zum aktiven elektrischen Beheizen eines Antriebsstrangs, wie z.B. einer Verbrennungskraftmaschine oder eines Katalysators als eines Bestandteils davon, von höheren Temperaturen ab ca. 180°C bis in hohe Temperaturbereiche bis 1.000°C hinein ausgelegt ist. Dabei ist das mindestens eine Heizelement in, an oder auf der Isolationslage des thermischen und/oder akustischen Abschirmteils so angeordnet, dass es in einer Einbaulage dem zu erwärmenden Antriebsstrang oder einem Bestandteil davon zugewandt außen an dem Antriebsstrang oder einem Bestandteil davon angeordnet ist wobei auf einer dem zu beheizenden Bauteil abgewandten Seite eine metallische Folie als Reflexionsschicht vorgesehen ist.

Damit sieht eine erfindungsgemäße Lösung ein aktives elektrisches Beheizen von vorstehend beispielhaft genannten Komponenten innerhalb eines Fahrzeuges mittels mindestens eines Heizelements oder mehrerer Heizelemente vor, wobei ein bekanntes Abschirmteil zugleich als Träger, wie auch als elektrische Isolierung fungieren kann. Auch stellt das vorhandene Abschirmteil eine thermische Isolation dar, um eine Abgabe der durch das Heizelement erzeugten Wärme insbesondere in eine Umgebung zu mindern und eine zielgerichtete Abgabe auf ein zu erwärmendes Bauteil zu fördern.

Eine Kombination mindestens eines Heizelementes mit einem bereits existierenden thermischen und/oder akustischen Abschirmteil trägt in sich als Vorteile die Tatsache, dass hiermit zumindest zu einer Umgebung hin bereits eine elektrische Isolation sowie auch eine thermische Isolierung vorhanden sein kann. Das entsprechend erweiterte thermische und/oder akustische Abschirmteil und das mindestens eine Heizelement umschließen damit als neuartiges Heizsystem in bekannter Weise weiterhin das zu heizende Bauteil, wobei die erforderliche Energie als elektrische Energie von außen eingebracht wird. Durch das Heizsystem fließt in bekannter Weise elektrischer Strom aus einer Spannungsquelle, beispielsweise dem Bordnetz, sodass sich das Heizsystem erwärmt. Die Wärmeleistung hängt gemäß dem Ohm'schen Gesetz zum einen vom Wert des elektrischen Widerstands ab. Dieser ergibt sich in Abhängigkeit vom materialeigenen Widerstand, dem Querschnitt und der Länge des Heizwiderstands. Zum anderen entscheidet die an den Heizwiderstand angelegte Spannung über die Wärmeleistung. Als Spannungsquelle wird beispielsweise das Bordnetz herangezogen und hier im Besonderen die gesteigerte Versorgungsspannung, z.B. ein geplantes 48 V Bordnetz, welches in zukünftigen Fahrzeugen als Standard verfügbar sein wird. Damit ist ein zusätzlicher Aufwand bei Herstellung, Einbau und Ersatz minimiert.

Gegenüber aus dem Stand der Technik bekannten Ansätzen zum Aufbau einer elektrischen Heizung sind als Vorteile einer erfindungsgemäßen Lösung u.a. mögliche Gewichtseinsparungen gegenüber bekannten und in Bauteilen eines Antriebsstrangs integrierten Heizsystemen, Kosteneinsparungen z.B. durch Verzicht einer eigenen elektrischen und/oder auch thermischen Isolation für das mindestens eine Heizelement, sowie eine einfache Nachrüstbarkeit in ein bestehendes System bei ausreichend guter Zugänglichkeit durch Modifikation eines bereits existierenden Bauteils zu nennen.

Als Lösung der genannten Aufgabe wird auch ein Verfahren zur Herstellung und Formgebung eines Heizelements vorgeschlagen, bei dem eine Fertigung in Anlehnung an die in der DE 10 2015 121 397 A1 offenbarten Lehre erfolgt, indem das mindestens eine Heizelement mit einer Isolationslage und unter Verwendung unterschiedlicher Materialien zumindest vorläufig in seiner Lage fixiert und mit einer Suspension benetzt oder sogar getränkt und während eines 3-D Formgebungsprozesses und eines Thermoformprozesses mit den Isolationslagen zur Bildung eines thermischen und/oder akustischen Abschirmteils in Form eines einzigen Bauteils mit bestimmten Zonen zum Einregeln unterschiedlicher Temperaturbereiche verbunden wird.

Vorteilhafte Weiterbildungen sind Gegenstand der jeweiligen Unteransprüche. Demnach ist das mindestens eine Heizelement als Widerstandsdraht oder als Flächenelement ausgebildet. Das mindestens eine Heizelement ist in einer bevorzugten Ausführungsform der Erfindung als Widerstandsdraht oder als Flächenelement ausgebildet, jeweils von elektrischem Strom durchflossen. Bei Verwendung eines Flächenelements als Alternative zum Einsatz von Drähten sind diskrete Leitbahnen für den Stromfluss durch isolierende Einschnitte in das Flächenelement erzeugt. Das Flächenelement kann alternativ als Leitpaste entsprechend gedruckt oder bei Verwendung einer vorzugsweise metallischen Folie entsprechend gestanzte Ausnehmungen aufweisen oder durch Lasern geschnitten sein. Damit kann auch eine Netzstruktur und/oder eine Anordnung nach Art eines Streckmetalls gebildet werden, die auch nach einer dreidimensionalen Verformung möglichst homogen vom elektrischen Strom durchflossen wird.

In Form eines Widerstandsdrahtes ist das Heizelement vorzugsweise meanderförmig oder ringförmig angeordnet. Ein in gemäß einer Ausführungsform der Erfindung in Schlaufen bzw. Mäandern verlaufendes Heizelement in Form eines Widerstandsdrahtes wird in diesem Sinne als Flächenelement betrachtet. Über die vorstehend genannten Ausführungsformen hinweg wird angestrebt, einen möglichst gleichmäßigen Wärmeeintrag in das zu beheizende System ohne punktuelle Überhitzung gewährleisten zu können.

In einer bevorzugten Ausführungsform der Erfindung Ausführungsform der Erfindung ist das Heizelement an oder in einem thermischen und/oder akustischen Abschirmteil integriert angeordnet, das in Ausführungsformen der Erfindung auch als mehrlagig aufgebautes Abschirmteil mit physikalisch unterschiedlichen Schichten ausgebildet ist. Neben einem jeweiligen Material der unterschiedlicher sind auch die Materialdicken mindestens einer jeweiligen inneren und äußeren Lage einem jeweiligen Anwendungsfall variabel angepasst und können insbesondere auch in bestimmten Zonen und Bereichen des thermischen und/oder akustischen Abschirmteils dort vorgegebenen Anforderungen entsprechend variieren. Dabei sind neben unterschiedlichen Materialdicken der Lagen auch unterschiedliche Materialkombinationen der Schichten unter Verwendung z.B. von Silikatvlies und/oder verstärktem Glimmerpapier realisierbar, welche durch eine Suspension im Zuge einer 3D-Formgebung verbunden werden. Ferner können in einzelnen Zonen und/oder Bereichen eines Abschirmteils verschiedene und auch verschiedenartige sowie unabhängig voneinander ansteuerbare Heizelemente zum Einregeln unterschiedlicher Temperaturbereiche vorgesehen sein. Damit können Bereich eines Abschirmteils auch nur mit einem Heizelement ausgestatten sein, es ist aber nicht notwendig, dass ein gesamtes Abschirmteil mit Heizelementen ausgerüstet ist. Die jeweiligen Bereiche bzw. Zonen werden den jeweiligen Anforderungen entsprechend optimal an eine jeweilige Anwendung angepasst, so dass eine elektrische Beheizung möglichst effizient und bedarfsgerecht in einer jeweiligen Zone erfolgen kann.

Vorzugsweise ist das mindestens ein Heizelement in, an oder auf dem thermischen und/oder akustischen Abschirmteil so angeordnet, dass es in einer Einbaulage dem zu erwärmenden Bauteil zugewandt angeordnet ist. Ferner ist bevorzugt, dass eine in einer Einbaulage dem zu erwärmenden Bauteil abgewandt angeordnete und dementsprechend nicht zu beheizende Seite des Heizsystems als Oberfläche eines 3D-Formkörpers durch ein sehr gut thermisch und auch elektrisch isolierenden Material gebildet ist. Damit ist auch ein Abstand zur Verringerung von thermischen Streuverlusten minimierbar. Hingegen ist die Seite, die in einer Einbaulage dem zu beheizenden Bauteil zugewandt ist, aus einem schlechter thermisch isolierenden Werkstoff gebildet und weist alternativ oder zusätzlich eine geringere Schichtdicke auf. Eine Grenze dieser Schichtdicke bildet z.B. eine geforderte mindeste elektrische Isolation.

Auf dem Markt verfügbare Heizleiter sind insbesondere für einen Einsatz im Hochtemperaturbereich entweder mit Glas- oder Silikatfaser umflochten. Weiterhin gibt es auch mineralisolierte Mantelheizleiter, wie sie z.B. von Tauchsiedern her bekannt sind. Neben Heizleitern sind auch Heizmatten bekannt. Bei Heizmatten ist der Heizleiter entweder in ein gießfähiges Material wie Silikon eingebettet, oder es ist ein Heizleiter auf einem Netz oder Gewebe aus Glas- oder Silikatfaser befestigt. Gerade die Heizmatten auf Basis von Silikon haben aber den Nachteil, dass sie nicht bis in Hochtemperaturbereiche mit bis zu 1.000 °C temperaturbeständig sind. Für einen optimalen Wärmeeintrag in ein jeweils gezielt zu beheizende System müssen aber alle vorstehend erwähnten Varianten zudem zusätzlich thermisch isoliert werden, damit nicht zu viel Wärme an die Umgebung verloren geht. Diese thermische Isolation wird in bekannten Vorrichtungen als separate Schicht eingebracht. Um ein Verrutschen der thermischen Isolation z.B. relativ zu einer Heizmatte während der Montage zu verhindern, werden die Heizmatte und die thermische Isolation häufig in eine Art Tasche verpackt. Die Herstellung solcher Anordnungen ist oft zeit- und kostenintensiv. Gerade dieser letztgenannte Punkt ist vorteilhafterweise durch eine erfindungsgemäße Anordnung des mindestens einen Heizelements zwischen zwei Schichten des mehrere Schichten umfassenden Abschirmteils obsolet, da das mindestens eine Heizelement so zugleich elektrisch, wie auch thermisch isoliert angeordnet ist. Zudem ist eine Anordnung zwischen zwei Ebenen gegen ein Verrutschen vergleichsweise wenig anfällig, so dass insbesondere auf eine zusätzliche Tasche etc. verzichtet werden kann.

Vorteilhafterweise ist mindestens eine Leitbahn oder Zuleitung für eine definierte Stromführung zu dem mindestens einen Heizelement in das Verbundmaterial so eingearbeitet, dass ein Mittel zum elektrischen Anschluss, z.B. in Form eines Steckers oder einer sonstigen Schnittstelle, außerhalb einer 3D-Form des fertigen Formteils liegt. Eine Anschlussmöglichkeit des Heizelements ist dadurch auch unter Berücksichtigung einer 3D-Form des fertigen Formteils gewährleistet.

Vorzugsweise ist das Heizsystem als Matte oder Netz flexibel und/oder verformbar ausgebildet, wobei für die unterschiedlichsten Temperaturbereiche angepasst Materialien zum Aufbau der heizenden Struktur vorgesehen sind. Dabei wird insbesondere darauf geachtet, dass in den verwendeten Materialien selber keine Ströme ableitbar sind. Die angepassten Materialien werden insbesondere bei großflächigen Bauteilen auch bereichsweise vorgesehen, um besondere Hitzezonen entsprechend widerstandfähiger als umgebende Bereiche auszurüsten.

In einer Weiterbildung der Erfindung ist das Heizelement als Folie ausgebildet, welche vorzugsweise elektrisch leitfähige fasergefüllte thermoplastische Verbundwerkstoffe enthält. Je nach Temperaturbereich werden andere thermoplastische Matrizen für diese Folie eingesetzt.

Bevorzugt sind in einer Ausführungsform der Erfindung mehrere Kupferbahnen für eine definierte Stromführung in das Verbundmaterial eingearbeitet. In Verbindung mit einer Erdungsleitung ist auch eine elektrische Isolierung des Heizelements und /oder eine elektrostatische Ableitung durch Ohm'sche Leiter möglich.

Eine andere Art eines Heizsystems besteht beispielsweise aus einer Gewebematte, welche mit Heizelementen ausgerüstet ist. Die Heizelemente werden wiederum je nach Temperaturbereich aus unterschiedlichen Materialen gebildet und werden auf der Gewebematte angebracht.

Des Weiteren sind zahlreiche unterschiedlichen Arten von flexiblen Heizmatten bekannt, welche für die unterschiedlichsten Temperaturbereiche angewendet werden können. Heizmatten mit Silikonmantel können für Temperaturen bis ca. 200 °C eingesetzt werden, wohingegen Heizmatten in gehäkelter Ausführung für den Hochtemperaturbereich auch von 400°C bis ca. 900° oder gar 1.000°C Anwendung finden können. Neben den Heizfolien und Heizmatten können auch Heizsysteme in Form von Netzen integriert werden. Diese können für entsprechende Temperaturbereich z.B. aus einem Glasfasernetzwerk bestehen, welche mit Kohlenstoff-Nano-Tubes und Isolationsmaterial beschichtet sind.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine perspektivische Ansicht eines Ausführungsbeispiels mit Integration eines elektrischen Heizsystems in einem Abschirmteil für eine Direktisolierung;
- Figur 2:: eine perspektivische Ansicht eines Ausführungsbeispiels mit Integration eines Heizsystems in ein mehrlagiges Abschirmteil;
- Figur 3:: eine teilweise geschnittene dreidimensionale Ansicht eines durch ein Abschirmteil umschlossenen Abgas-Katalysators mit einem Heizelement und
- Figur 4:: ein Ausführungsbeispiel mit Integration eines Heizsystems in ein mehrlagiges Abschirmteil mit physikalisch unterschiedlichen Schichten sowie einer metallischen Folie als Reflexionsschicht auf einer dem zu beheizenden Bauteil abgewandten Seite in einer Ansicht analog Figur 1.

Über die verschiedenen Abbildungen und Ausführungsbeispiele hinweg werden für gleiche Elemente stets die gleichen Bezugszeichen verwendet.

Eine erfindungsgemäße Erweiterung eines thermischen und/oder akustischen Abschirmteils mit der Zusatzfunktionalität der elektrischen Beheizbarkeit durch ein Heizsystem ist grundsätzlich nicht auf eine spezielle Anwendung begrenzt. Die Integration dieser Art einer Heizung in das Abschirmteil kann in unterschiedlichster Form vorgenommen werden. Beispielsweise kann sie in ein Abschirmteil, welches zur Direktisolierung eingesetzt wird, integriert werden. Hierdurch kann beispielsweise eine auf dem Einsatz eines Katalysators basierende Abgasreinigung früher wirken und dementsprechend sowohl bei Otto- als auch Dieselmotoren die Emissionen als auch der Kraftstoffverbrauch und damit auch die CO₂ Emission z.B. eines Kraftfahrzeugs reduziert werden. Des Weiteren ist aber auch denkbar, das Heizsystem in ein mehrlagiges Abschirmteil zu integrieren. Ohne dass darauf hier im Detail mit Abbildungen weiter eingegangen wird muss darauf hingewiesen werden, dass eine derartige Beheizbarkeit auch in Antriebssträngen unter Verwendung von Brennstoffzellen oder Akkumulatoren Abschirmteile in unterschiedlichen Temperaturbereichen eingesetzt sind, die nun durch die Kombination mit einem Heizsystem eine besondere Zusatzfunktionalität erhalten.

Das Heizsystem kann nicht nur für unterschiedliche Temperaturbereiche vorgesehen sein, wobei insbesondere höhere Temperaturbereiche oberhalb von ca. 180°C bis in hohe Temperaturbereiche von ca. 1.000°C hinein von besonderem Interesse sind, sondern das Heizsystem kann auch in unterschiedlichster Form ausgeführt und weitgehend beliebig dreidimensional verformt werden. Daher werden nachfolgend nur grundsätzlich unterschiedliche Aufbauformen als Anordnungen für die Integration eines Heizsystems in ein Abschirmteil in stark vergrößerten Ausschnitten dargestellt und beschrieben, ohne auch auf die Bauform des eigentlichen Hitzeschildes oder die Art des zu erwärmenden Antriebsstrangs oder eines Bestandteils davon noch weiter einzugehen.

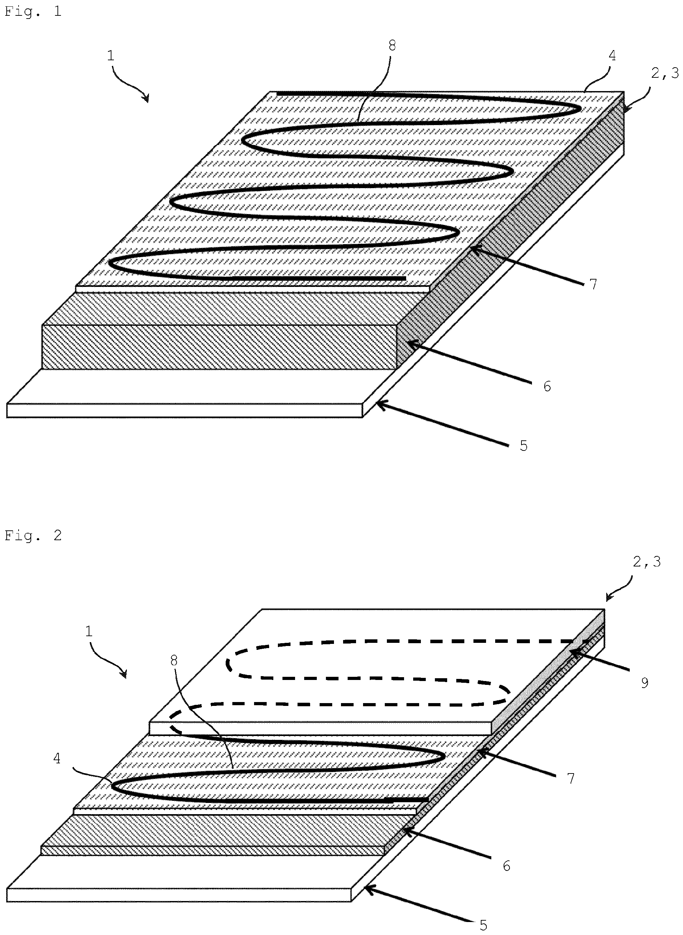

In der Abbildung von Figur 1 ist exemplarisch als kleinen Ausschnitt eines Formkörpers ein schematischer Aufbau für die mögliche Integration eines neuartigen Heizsystems 1 in ein existierendes Bauteil 2 dargestellt. Das Bauteil 2 ist in bevorzugten Ausführungsformen der Erfindung ein thermisch und/oder akustisch wirksames Abschirmteil 3 z.B. als Teil eines größeren Abschirmteils, das hier für eine Direktisolierung einer nicht weiter dargestellten Verbrennungskraftmaschine oder eines Bestandteils eines daran unmittelbar anschließenden Abgasstranges abgebildet ist. Bei einem derartigen Teil eines Abgasstranges handelt es sich hier um einen Katalysator, der in einem Abgastrakt der Verbrennungskraftmaschine an einen Krümmer anschließend vorgesehen ist. Betriebstemperaturen von Katalysatoren liegen i.d.R. im Bereich unterhalb von 900° bis ca. 1.000°C. Um die bestmögliche Funktionalität des Katalysators zu gewährleisten, soll ein jeweiliger Temperaturbereich eines Regelbetriebs auch nach einem Kaltstart der Verbrennungskraftmaschine so schnell als möglich erreicht werden, insbesondere auch bei tiefen Umgebungstemperaturen.

Um eine wirksame Reduzierung von Stickoxiden, NOₓ, im Abgas zu gewährleisten ist im Bereich einer Harnstoff-Einspritzung andererseits eine Temperatur von ca. 180°C erforderlich. Unterhalb der genannten Schwelltemperatur kann die Umsetzung von Stickoxiden durch eingespritzten Harnstoff i.d.R. nicht ablaufen. Es ist aber bekannt, dass eine Verbrennungskraftmaschine bzw. ein Motor selbst während des laufenden Betriebs zu kalt werden kann, wodurch die vorstehende Schwelltemperatur mit der Folge unterschritten werden kann, dass ein Abgas eine zu hohe Konzentration von Stickoxiden aufweist. Auch hier ist ein Verfahren für ein geregeltes Vorheizen des Motors und/oder eines anschließenden Abgasstrangs sinnvoll und wünschenswert.

Für beide vorstehend genannten Szenarien wird nachfolgend ein Abschirmteil 3 beschrieben. Dabei ist hervorzuheben, dass bei entsprechender Größe dieses Abschirmteils 3 über bestimmte Zonen hinweg eine unterschiedliche Beheizbarkeit vorgesehen sein kann. Damit ist es grundsätzlich möglich, in einer Zone des Abschirmteils 3 die Randbedingungen zum möglich effizienten Betrieb z.B. eines Abgaskatalysators mit einem platinbeschichteten Keramikkörper in dessen hohen Betriebstemperaturbereich einzustellen, in einem anderen Bereich hingegen nur eine Mindesttemperatur von ca. 180°C für eine zuverlässige und effiziente Stickstoffreduktion im Abgasstrom durch geregeltes Nachheizen sicherzustellen. In diesem Sinne kann ein Abschirmteil 3 segmentiert werden, um in Strömungsrichtung eines Abgases gesehen vor, um oder auch nach einem Katalysator ein jeweils vorbestimmtes Temperaturniveau durch geregelte selektive Beheizung sicherstellen zu können.

Das thermische und/oder akustische Abschirmteil 3 umfasst dazu jeweils mindestens ein Heizelement 4 und weist dem entgegengesetzt nach außen hin eine metallische Reflexionsschicht 5 auf, die gegen Wärmestrahlung aktiv wirksam ist. Auf der Reflexionsschicht 5 baut eine thermische Isolationslage 6 auf, auf der dann eine flächige Struktur 7 aufgebracht ist, die ihrerseits einen mäandernd verlaufenden Widerstandsdraht 8 beinhaltet. In einer Einbaulage ist diese flächige Struktur 7 des Heizsystems 1 zu dem aufzuheizenden Teil oder Bereich einer Verbrennungskraftmaschine oder eines Bestandteils davon direkt angrenzend angeordnet, möglichst sogar in direktem, nur elektrisch isolierendem Oberflächenkontakt.

In dem Ausführungsbeispiel von Figur 2 ist ein schematischer Aufbau für die mögliche Integration des Heizsystems 1 in einem mehrlagigen Abschirmteil 3 abgebildet. Gegenüber dem Ausführungsbeispiel von Figur 1 ist das Ausführungsbeispiel gemäß Figur 2 bei geänderten geometrischen Verhältnissen um eine metallische Lage 9 erweitert, die die flächige Struktur 7 des Heizsystems 1 nun abdeckt.

Die flächige Struktur 7 ist thermisch leitfähig und durch eine entsprechende, hier nicht weiter dargestellte Schicht elektrisch isolierend ausgebildet, um die vom Widerstandsdraht 8 abgegebene Wärmemenge gleichmäßiger zu verteilen. Statt der Verwendung eines exemplarisch angedeutet mäandernd verlaufenden Widerstandsdrahts 8 als eigentlichen Wärmequelle ist die flächige Struktur 7 in einem nicht weiter zeichnerisch dargestellten Ausführungsbeispiel selber auch als elektrisch leitfähige Heizfolie, als Gewebematte mit darin angeordneten und elektrisch verbundenen Heizelementen oder eine flexibel und verformbar ausgebildete Heizmatte ausgebildet. Gegenüber einem oder mehreren Widerstandsdrähten 8 können die letztgenannten Bauformen sich durch verbesserte Verformbarkeit auszeichnen, so dass weiterhin alle schon heute gebräuchlichen dreidimensionalen Formen von thermischen und/oder akustischen Abschirmteilen mit der zusätzlichen Funktionalität einer elektrisch regelbaren Beheizbarkeit eines angrenzenden Antriebsstrangs oder eines Bestandteils davon hergestellt werden können.

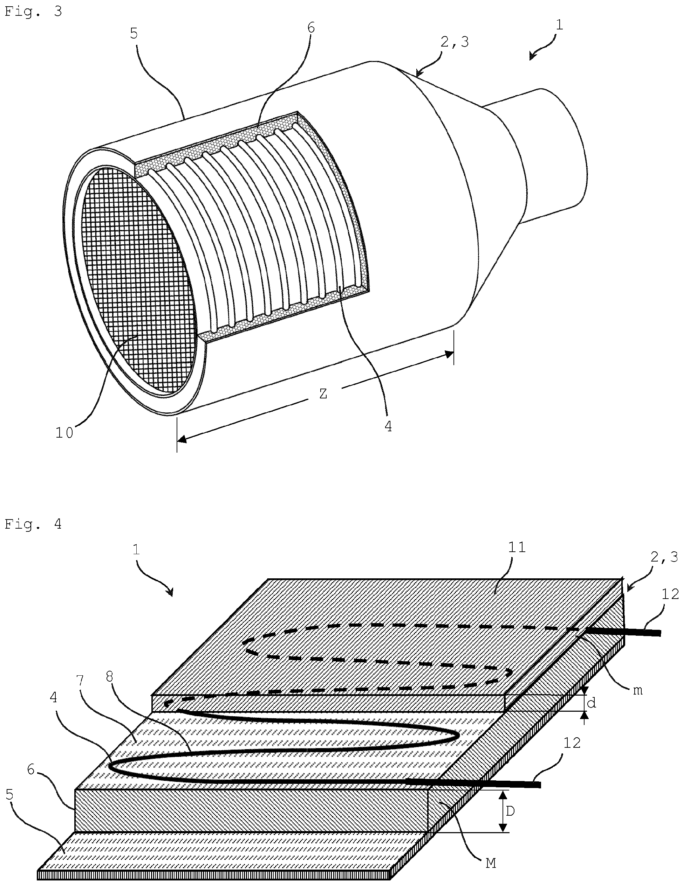

Figur 3 zeigt als teilweise geschnittene dreidimensionale Ansicht ein Heizsystem 1 mit einem durch eine metallische Reflexionsschicht 5 nach außen hin abgedeckten Abschirmteil 3 mit einem bekannten Abgas-Katalysator 10, das in einer bestimmten Zone Z durch ein Heizelement 4 analog des Ausführungsbeispiels von Figur 1 eine Heizleistung von 1 bis 5 kW bei verschiedene Nennspannungen realisiert, z.B. 48 V. Ein schnelleres Erreichen einer optimalen Sollbetriebstemperatur wird durch einen intensiven Kontakt zwischen dem Heizelement 4 und dem hier durch eine Beschichtung elektrisch isolierend wirkenden Katalysator 10 bewirkt und führt zu einer wesentlichen Reduktion eines Ausstoßes von NOₓ und CO₂ auch in einer Kaltstartphase oder betriebsbedingter zu starker Abkühlung. Ein Aufwand an elektrischer Energie stellte sich in Testzyklen, wie z.B. WLTC Messverfahren zur Bestimmung der Abgasemissionen, als wesentlich geringer als ein Rekuperationspotential dar.

Figur 4 zeigt nun ein Ausführungsbeispiel eines Abschirmteils 3 mit Integration eines Heizelements 4 in ein mehrlagig aufgebautes Abschirmteil mit physikalisch unterschiedlichen Schichten sowie einer metallischen Folie 5. Die metallische Folie 5 dient wieder als Reflexionsschicht auf einer dem zu beheizenden Bauteil abgewandten Seite. Das Heizelement 4 ist damit zwischen zwei Schichten physikalisch unterschiedlicher Isolationslagen 6, 11 des Abschirmteils 3 elektrisch und thermisch isoliert angeordnet. Die Isolationslage 6 bildet mit einem Material M einer Dicke D eine Außenschicht, während die Isolationslage 11 aus einem Material m und einer Dicke d eine Innenschicht darstellt. Ohne weitere zeichnerische Darstellung ist es damit grundsätzlich möglich, in einem Abschirmteil 3 als einheitlichem Bauteil verschiedene Zonen Z zu schaffen, die unterschiedlichen Randbedingungen und Vorgaben hinsichtlich einer thermischen und akustischen Isolierung und/oder einer einzuhaltenden Mindesttemperatur unter Anpassung jeweiliger Heizelemente 4 genügen. Ein solches Bauteil kann mit unterschiedlichen elektrischen Anschlüssen vorteilhafterweise sogar einstückig hergestellt werden, wodurch es grundsätzlich auch leicht und schnell montierbar ist.

Ein Fertigungsverfahren gemäß der Lehre der DE 10 2015 121 397 A1 sieht nun vor, dass die aus Vliesmaterialien gebildeten Isolationslagen 6, 11 zur Ausbildung eines formstabilen Abschirmteils 3 mit einer vorbestimmten 3D-Form mit einer Suspension je Anwendungsfall durch bekannte Verfahren benetzt bis getränkt und einem Thermoformprozess unterworfen werden. Das Endprodukt ist dann eine Kombination eines akustisch offenen, formstablien Vliesstoffes mit einem darin eingebetteten Heizsystem, das darüber hinaus eine Kombination einer thermischen, akustischen und elektrischen Isolation mit einem elektrischen Heizsystem bildet. Unter Kombination unterschiedlicher Materialien m, M und Materialdicken d, D ist für eine optimale Anpassung des elektrischen Heizsystems an das zu beheizende System gesorgt, wobei das gesamte Heizsystem endgeometrienah herstellbar ist. In dem in Figur 4 dargestellten kleinen Ausschnitt eines im Weiteren dreidimensional verformten Abschirmteils 3 ist vorgesehen, dass die äußere Isolationslage 6 als in einer Einbaulage dem zu erwärmenden Bauteil abgewandt angeordnete und nicht zu beheizende Seite des Heizsystems 1 als Oberfläche des 3D-Formkörpers 2 aus einem sehr gut thermisch und auch elektrisch isolierenden Material M besteht und eine Schichtmächtigkeit bzw. Dicke D aufweist. Hingegen besteht die in einer Einbaulage dem zu erwärmenden Bauteil zugewandt angeordnete Isolationslage 11 aus einem schlechter thermisch isolierenden Werkstoff m und weist zudem auch eine geringere Schichtdicke d auf.

Im weiteren Verlauf des Bauteils 2 sind Materialdicken d, D der inneren Isolationslage 11 und äußeren Isolationslage 6 sowie Materialkombinationen bzw. deren Wärmeleitfähigkeiten m, M einem jeweiligen Anwendungsfall entsprechend variabel anpassbar. Damit können in bestimmten Zonen und Bereichen des thermischen und akustisch wirksamen Abschirmteils 3 insbesondere dort vorgegebener Anforderungen entsprechend ausgebildet werden, um damit auch eine mögliche elektrische Erwärmung gezielt einzusetzen. Es ist zu betonen, dass es sowohl die Möglichkeit gibt den Heizdraht zwischen zwei unterschiedliche als auch zwischen zwei gleiche Materialien zu legen. Dies kann sowohl die Dicke, Dichte oder Art der Materialien betreffen. Wichtig ist, dass die dem zu beheizenden Bauteil abgewandte Seite mit besonderen Augenmerk auf die thermische und/oder akustische Eigenschaft ausgewählt wird. Die dem zu beheizenden Bauteil zugewandte Seite soll besonders in Hinblick auf elektrische Isolation ausgewählt werden. Des Weiteren sollte die innere Isolationslage 11 als Innenschicht des Heizsystems 1 möglichst eine hohe Wärmeleitfähigkeit besitzt, um die erzeugte Wärme nicht übermäßig vom zu beheizenden Bauteil abzuschirmen. Eine abgewandte Seite sollte hingegen aus einem Material M bestehen, das eine besonders geringe Wärmeleitfähigkeit aufweist.

Ein Anschlussmittel 12 ist Leitbahn oder Zuleitung für eine definierte Stromführung zu dem mindestens einen Heizelement in das vorstehend beschriebenen Verbundmaterial des Heizsystems 1 so eingearbeitet, dass ein nicht weiter dargestelltes Mittel für einen elektrischen Anschluss, z.B. in Form eines Steckers oder einer sonstigen Schnittstelle, außerhalb einer 3D-Form des fertigen Formteils liegt. Eine Anschlussmöglichkeit des Heizelements ist dadurch auch unter Berücksichtigung einer 3D-Form des fertigen Formteils jederzeit gewährleistet.

### Bezugszeichenliste

- 1: Heizsystem
- 2: existierendes Bauteil
- 3: akustisches und thermisches Abschirmteil
- 4: Heizelement
- 5: metallische Reflexionsschicht
- 6: thermische Isolationslage
- 7: flächige Struktur
- 8: mäandernd verlaufender Widerstandsdraht
- 9: metallische Lage
- 10: Katalysator
- 11: innere Isolationslage / Innenschicht
- 12: Anschlussmittel

- d: Dicke der Innenschicht
- D: Dicke der Außenschicht
- m: Material der Innenschicht
- M: Material der Außenschicht
- Z: Zone mit bestimmten Temperaturvorgaben und mindestens einem entsprechend ausgebildeten Heizelement 4

## Patentansprüche

1. Abschirmteil (3), das zum Umschließen eines Antriebsstrangs oder eines Bestandteils davon ausgebildet ist, wobei das Abschirmteil (3) nach außen hin eine metallische Reflexionsschicht (5) mit anschließender thermischer Isolationslage (6) aufweist, die mit einem Heizsystem (1) versehen ist, wobei das Heizsystem (1) mindestens ein Heizelement (4) zum aktiven elektrischen Beheizen eines Antriebsstrangs oder eines Bestandteils davon umfasst, und wobei das Heizelement in, an oder auf der Isolationslage des thermischen und akustischen Abschirmteils so angeordnet ist, dass es in einer Einbaulage dem zu erwärmenden Antriebsstrang oder einem Bestandteil davon zugewandt außen an dem Antriebsstrang oder einem Bestandteil davon angeordnet ist
**dadurch gekennzeichnet, dass**
das mindestens eine Heizelement (4) auf Basis von NickelChrom-Legierungen für höhere Temperaturbereiche oberhalb von ca. 180°C bis hohe Temperaturbereiche von ca. 1.000°C hinein ausgelegt ist,
wobei eine metallische Folie (5) als Reflexionsschicht auf einer dem zu beheizenden Bauteil abgewandten Seite vorgesehen ist.

2. Abschirmteil (3) nach dem vorhergehenden Anspruch, **dadurch gekennzeichnet, dass** das mindestens eine Heizelement (4) als Widerstandsdraht oder als Flächenelement ausgebildet ist.

3. Abschirmteil (3) nach einem der vorhergehenden Ansprüche, **dadurch gekennzeichnet, dass** mindestens ein Heizelement (4) als in Schlaufen bzw. Mäandern verlaufendes Heizelement in Form eines Widerstandsdrahtes (8) ausgebildet ist.

4. Abschirmteil (3) nach dem vorhergehenden Anspruch, **dadurch gekennzeichnet, dass** mindestens ein Heizelement (4) an oder in einer thermischen und akustischen Abschirmung integriert angeordnet ist, wobei die Abschirmung als mehrlagig aufgebautes Abschirmteil (3) mit physikalisch unterschiedlichen Schichten ausgebildet ist.

5. Abschirmteil (3) nach einem der vorhergehenden Ansprüche, **dadurch gekennzeichnet, dass** eine in einer Einbaulage dem zu erwärmenden Bauteil abgewandt angeordnete und nicht zu beheizende Seite des Heizsystems (1) als Oberfläche eines 3D-Formkörpers aus einem sehr gut thermisch und auch elektrisch isolierenden Material (M) besteht.

6. Abschirmteil (3) nach einem der vorhergehenden Ansprüche, **dadurch gekennzeichnet, dass** das mindestens eine Heizelement (4) an dem thermischen und akustischen Abschirmteil (3) so angeordnet ist, dass es in einer Einbaulage dem zu erwärmenden Bauteil zugewandt angeordnet ist und eine Isolationslage (6) zu dem zu beheizenden Bauteil hin aus einem schlechter thermisch isolierenden Werkstoff (m) besteht und/oder eine geringere Schichtdicke (d) aufweist.

7. Abschirmteil (3) nach dem vorhergehenden Anspruch, **dadurch gekennzeichnet, dass** Materialdicken (m, M) einer jeweiligen inneren Isolationslage (11) und äußeren Isolationslage (6) sowie Materialkombinationen einem jeweiligen Anwendungsfall variabel angepasst sind, und/oder in bestimmten Zonen (Z) und/oder Bereichen des thermischen und akustischen Abschirmteils (3) entsprechend dort vorgegebener Anforderungen verschiedene Heizelemente (4) zum Einregeln unterschiedlicher Temperaturbereiche vorgesehen sind.

8. Abschirmteil (3) nach einem der vorhergehenden Ansprüche, **dadurch gekennzeichnet, dass** mindestens ein Heizelement (4) als Folie ausgebildet ist, welche elektrisch leitfähige fasergefüllte thermoplastische Verbundwerkststoffe enthält, wobei je nach Temperaturbereich andere thermoplastische Matrizen vorgesehen sind.

9. Abschirmteil (3) nach dem vorhergehenden Anspruch, **dadurch gekennzeichnet, dass** mehrere Kupferbahnen für eine definierte Stromführung in dem mindestens einen Heizelement (4) in das Verbundmaterial der Isolationslagen (6, 11) eingearbeitet sind.

10. Abschirmteil (3) nach Anspruch 1, **dadurch gekennzeichnet, dass** es eine Gewebematte umfasst, die mit Heizelementen (4) ausgerüstet ist.

11. Abschirmteil (3) nach einem der vorhergehenden Ansprüche, **dadurch gekennzeichnet, dass** das Heizsystem (1) als Heizmatte flexibel und/oder dreidimensional verformbar ausgebildet ist, wobei für die unterschiedlichsten Temperaturbereiche bereichsweise angepasste Materialien vorgesehen sind.

12. Abschirmteil (3) nach dem vorhergehenden Anspruch, **dadurch gekennzeichnet, dass** mindestens ein Anschlussmittel (12) an einer Leitbahn oder Zuleitung für eine definierte Stromführung zu dem mindestens einen Heizelement (4) vorgesehen ist, das zum elektrischen Anschluss außerhalb einer 3D-Form des fertigen Formteils (2) angeordnet ist.

13. Verfahren zur Herstellung und Formgebung eines Abschirmteils (3) nach einem der vorstehenden Ansprüche,
**dadurch gekennzeichnet, dass** das mindestens eine Heizelement (4) mit einer Isolationslage (6) in seiner Lage fixiert und
mit einer Suspension benetzt oder getränkt
während eines 3-D Formgebungsprozesses und eines Thermoformprozesses mit den Isolationslagen (6, 11) zur Bildung einer thermischen und akustischen Abschirmung in Form eines Bauteils (2) verbunden wird.

## Claims

1. Shielding element (3) which is designed to enclose a drive train or a component thereof, wherein towards its outside the shielding element (3) has a metallic reflection layer (5) with an adjoining thermal insulation layer (6) which is provided with a heating system (1), wherein the heating system (1) comprises at least one heating element (4) for active electrical heating of a drive train or a component thereof, and wherein the heating element (4) is arranged in, at or on the insulation layer (6) of the thermal and acoustic shielding element (3) to face outwardly on the drive train or a component thereof to be heated in an installation position,
**characterized in that**
the at least one heating element (4) based on nickel-chromium alloys is designed for higher temperature ranges above about 180°C up to high temperature ranges of about 1,000°C,
wherein a metallic foil (5) is provided as a reflective layer on a side facing away from the component to be heated.

2. Shielding element (3) according to the preceding claim, **characterized in that** the at least one heating element (4) is constructed as a resistance wire or as a surface element.

3. Shielding element (3) according to one of the preceding claims, **characterized in that** at least one heating element (4) is designed as a heating element in the form of a resistance wire (8) running in loops or meanders.

4. Shielding element (3) according to the preceding claim, **characterized in that** at least one heating element (4) is arranged on or integrated in a thermal and acoustic shielding, wherein the shielding is constructed as a multilayer Shielding element (3) with physically different layers.

5. Shielding element (3) according to one of the preceding claims, **characterized in that** a side of the heating system (1) which is arranged in an installation position facing away from the component to be heated and which is not to be heated consists as the surface of a 3D moulded body of a material (M) which has very good thermal and also electrical insulation properties.

6. Shielding element (3) according to one of the preceding claims, **characterized in that** the at least one heating element (4) is arranged on the thermal and acoustic Shielding element (3) in such a way that it is arranged in an installation position facing the component to be heated and an insulation layer (6) towards the component to be heated consists of a material (m) with poorer thermal insulation and/or has a smaller layer thickness (d).

7. Shielding element (3) according to the preceding claim, **characterized in that** material thicknesses (m, M) of a respective inner insulation layer (11) and outer insulation layer (6) as well as material combinations are variably adapted to a respective application, and/or different heating elements (4) for regulating different temperature ranges are provided in certain zones (Z) and/or regions of the thermal and acoustic Shielding element (3) in accordance with requirements specified there.

8. Shielding element (3) according to one of the preceding claims, **characterized in that** at least one heating element (4) is formed as a foil which contains electrically conductive fibre-filled thermoplastic composite materials, different thermoplastic matrices being provided depending on the temperature range.

9. Shielding element (3) according to the preceding claim, **characterized in that** a plurality of copper tracks are incorporated in the composite material of the insulation layers (6, 11) for a defined current conduction in the at least one heating element (4).

10. Shielding element (3) according to claim 1, **characterized in that** it comprises a fabric mat which is equipped with heating elements (4).

11. Shielding element (3) according to one of the preceding claims, **characterized in that** the heating system (1) is designed as a heating mat which is flexible and/or three-dimensionally deformable, wherein materials are provided which are adapted in regions for the most varied temperature ranges.

12. Shielding element (3) according to the preceding claim, **characterized in that** at least one connecting means (12) is provided on a conducting path or supply line for a defined current conduction to the at least one heating element (4), which is arranged for electrical connection outside a 3D shape of the finished moulded part (2).

13. Method of manufacturing and shaping shielding element (3) according to one of the preceding claims,
**characterized in that** the at least one heating element (4) with an insulation layer (6) is fixed in its position and is wetted or impregnated with a suspension during a 3-D moulding process and a thermo-moulding process is bonded to the insulation layers (6, 11) to form a thermal and acoustic shield in the form of a component (2).

## Revendications

1. Elément de blindage (3) conçu pour entourer une chaîne de traction ou un de ses composants, l'élément de blindage (3) présentant vers l'extérieur une couche de réflexion métallique (5) suivie d'une couche d'isolation thermique (6), qui est pourvue d'un système de chauffage (1), le système de chauffage (1) comprenant au moins un élément chauffant (4) pour le chauffage électrique actif d'une chaîne de traction ou d'un de ses composants, et l' élément chauffant (4) est disposée dans, sur ou sur la couche isolante (6) de l'élément de blindage thermique et acoustique (3) de telle sorte qu'il est disposée à l'extérieur de la chaîne de traction ou d'un composant de celle-ci dans une position de montage faisant face à la chaîne de traction à chauffer ou à un composant de celle-ci,
**caractérisé en ce que**
l'au moins un élément chauffant (4) à base d'alliages nickel-chrome est conçu pour des plages de température élevées au-dessus d'environ 180°C jusqu'à des plages de température élevées d'environ 1000°C,
une feuille métallique (5) étant prévue comme couche de réflexion sur un côté opposé à l'élément à chauffer.

2. Elément de blindage (3) selon la revendication précédente, **caractérisé en ce que** le au moins un élément chauffant (4) est conçu comme un fil de résistance ou comme un élément de surface.

3. Elément de blindage (3) selon l'une des revendications précédentes, **caractérisée en ce qu'**au moins un élément chauffant (4) est conçu comme un élément chauffant s'étendant en boucles ou en méandres sous la forme d'un fil de résistance (8) .

4. Elément de blindage (3) selon la revendication précédente, **caractérisé en ce qu'**au moins un élément chauffant (4) est disposé sur ou intégré dans un blindage thermique et acoustique, le blindage étant conçu comme un élément de blindage (3) à structure multicouche avec des couches physiquement différentes.

5. Elément de blindage (3) selon l'une des revendications précédentes, **caractérisée en ce qu'**un côté du système de chauffage (1) disposé dans une position de montage à l'opposé du composant à chauffer et ne devant pas être chauffé est constitué, en tant que surface d'un corps moulé 3D, d'un matériau (M) très bien isolant thermiquement et également électriquement.

6. Elément de blindage (3) selon l'une des revendications précédentes, **caractérisée en ce que** le ou les éléments chauffants (4) sont disposés sur la partie de blindage thermique et acoustique (3) de telle sorte que, dans une position de montage, ils soient tournés vers le composant à chauffer et qu'une couche d'isolation (6) vers le composant à chauffer soit constituée d'un matériau (m) moins bien isolant thermiquement et/ou présente une épaisseur de couche (d) plus faible.

7. Elément de blindage (3) selon la revendication précédente, **caractérisé en ce que** les épaisseurs de matériau (m, M) d'une couche d'isolation intérieure (11) et d'une couche d'isolation extérieure (6) respectives ainsi que les combinaisons de matériaux sont adaptées de manière variable à un cas d'application respectif, et/ou **en ce que** différents éléments chauffants (4) sont prévus dans des zones (Z) et/ou des régions déterminées de l'élément de blindage thermique et acoustique (3) en fonction des exigences qui y sont prédéfinies pour régler des plages de température différentes.

8. Elément de blindage (3) selon l'une des revendications précédentes, **caractérisée en ce qu'**au moins un élément chauffant (4) est réalisé sous la forme d'une feuille qui contient des matériaux composites thermoplastiques remplis de fibres et conducteurs d'électricité, d'autres matrices thermoplastiques étant prévues en fonction de la plage de température.

9. Elément de blindage (3) selon la revendication précédente, **caractérisée en ce que** plusieurs pistes de cuivre sont intégrées dans le matériau composite des couches d'isolation (6, 11) pour un guidage défini du courant dans le ou les éléments chauffants (4).

10. Elément de blindage (3) selon la revendication 1, **caractérisée en ce qu'**elle comprend un matelas de tissu équipé d'éléments chauffants (4).

11. Elément de protection (3) selon l'une des revendications précédentes, **caractérisé en ce que** le système de chauffage (1) est conçu comme un tapis chauffant flexible et/ou déformable en trois dimensions, des matériaux adaptés par zones étant prévus pour les plages de température les plus diverses.

12. Elément de blindage (3) selon la revendication précédente, **caractérisée en ce qu'**au moins un moyen de raccordement (12) est prévu sur une voie conductrice ou une ligne d'alimentation pour un guidage défini du courant vers le au moins un élément chauffant (4), qui est disposé pour le raccordement électrique en dehors d'un moule 3D de la pièce moulée finie (2) .

13. Procédé de fabrication et de formation d'un élément de blindage (3) selon l'une des revendications précédentes,
**caractérisé en ce que** l'au moins un élément chauffant (4) est fixé dans sa position par une couche isolante (6) et
mouillé ou imprégné d'une suspension
pendant un processus de formation 3D et un processus de thermoformage, est relié aux couches d'isolation (6, 11) pour former un blindage thermique et acoustique sous la forme d'un élément de construction (2).
